# EUROPEAN PATENT APPLICATION

(11) **EP 4 310 373 A1**
(43) Date of publication of application: **24.01.2024**
(21) Application number: 23185938.0
(22) Date of filing: 17.07.2023
(51) Int. Cl.: F16K 17/40, F17C 13/00

(54) **TRIGGER DEVICE FOR FUEL CALL AUTOMOTIVE SYSTEMS**

(30) Priority: 21.07.2022 IT 202200015327
(71) Applicant: OMB Saleri S.p.A. - Societa' Benefit, 25126 Brescia (IT)
(72) Inventor: MONDINELLI, Francesco, I-25126 BRESCIA (IT); SANTULLI, Renato, I-25126 BRESCIA (IT); FERRARA, Silvia, I-25126 BRESCIA (IT); DEGIACOMI, Nicola, I-25126 BRESCIA (IT)
(74) Representative: Pulieri, Gianluca Antonio

(57) **Abstract**

A trigger device (43) for a thermal safety device (15) of a fuel cell automotive system comprises a stop (46), a heat sensitive element (65) consisting of a wire made of a shape-memory material, and a trigger abutment (75). In an intermediate configuration of the trigger device, the distal end (69) of the heat sensitive element (65) is freely slidable by means of the shortening of the heat sensitive element (65); in an activation configuration of the trigger device, in which the temperature (T) perceived by the heat sensitive section of the heat sensitive element (65) is above or equal to the activation temperature (T1), the distal end (69) abuts against the trigger abutment (75), so that the proximal end (67) is adapted to move the stop (46) to bring the thermal safety device (15) into the remote emergency configuration.

## Description

### Technical field

The object of the present invention is a trigger device for a thermal safety device of a fuel cell automotive system. In particular, the object of the present invention is a trigger device for a thermal safety device of the fuel cell automotive system.

### Prior art

In high-pressure hydrogen fuel cell systems, the gas is loaded into a tank at a very high pressure, for example 350 or 700 or sometimes 1000 bar. A multifunction valve (OTV valve) is applied to the tank, which multifunction valve, in addition to managing the flow of gas from a supply port to the tank and from the tank to downstream devices, is usually capable of fulfilling other functions, for example functions for detecting operating parameters, such as the temperature and pressure of the gas, and safety functions. For this purpose, an OTV valve usually comprises a thermal safety device (TPRD device) that allows for the sudden discharge of the hydrogen loaded into the tank in the event that the valve reaches a temperature higher than a threshold safety temperature.

The TPRD device is usually associated with a remote trigger device that, when a region that is remote from the position of the TPRD device reaches or exceeds the safety temperature threshold, activates the TPRD device in such a way as to discharge the hydrogen loaded into the tank.

The Applicant, for years now, has been producing and marketing an OTV valve that is highly appreciated by the market, and is also the holder of numerous international applications relating to such valves. In particular, the Applicant is the holder of Italian patent application No. 10 2021 000 032 540, which relates to an OTV valve with a TPRD device that is associated with a remote trigger device.

A further exemplary embodiment of a remote trigger device is shown in the International Application WO-A1-2021/108387, where a solution is described wherein a wire made of shape memory material (SMA wire) is held taught by a delay spring device that, below the threshold safety temperature, makes it possible to compensate for unwanted elongations of the SMA wire.

However, with the aim of ensuring an increasingly greater level of safety, the efforts of companies in the sector are constantly oriented towards searching for innovative solutions, with particular reference to operating reliability and the large scale production economy of such remote trigger devices.

### Object of the invention

The object of the present invention is that of manufacturing a remote trigger device for a fuel cell automotive system, in particular for an OTV valve of said system, that may be capable of quickly detecting a dangerous condition and immediately commencing with the evacuation of the pressurized gas with higher operational reliability.

This object is achieved by a trigger device according to claim 1. The dependent claims describe additional advantageous embodiments.

### Brief description of the drawings

The features and advantages of the remote trigger device according to this invention will become apparent from the following description, given as a non-limiting example in accordance with the figures in the accompanying drawings, wherein:

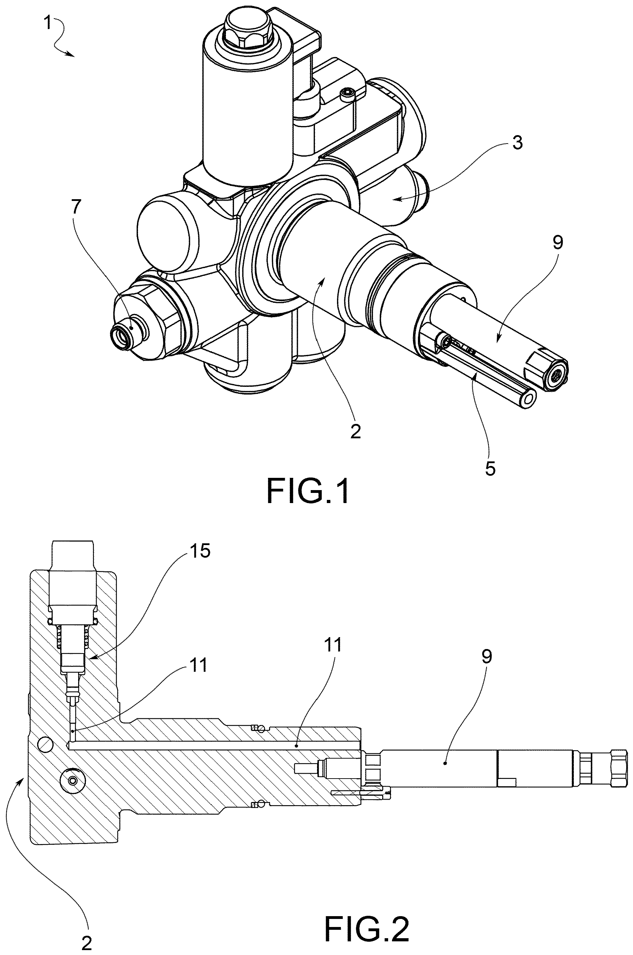

- Figure 1 shows a multifunctional valve with a thermal safety device according to one embodiment of the present invention;
- Figure 2 is a longitudinal cross section of the multifunctional valve in Figure 1;
- Figure 3 shows the thermal safety device, an auxiliary device and a trigger device in a stand-by configuration of the trigger device and in a configuration of normal operation of the multifunction valve;
- Figure 4 shows the thermal safety device in a local emergency configuration;
- Figure 5 shows the trigger device in a trigger configuration and the thermal safety device in a remote emergency configuration;
- Figure 6 shows the trigger device in a stand-by configuration;
- Figure 7 shows the trigger device in an activation configuration;
- Figure 8 shows the trigger device in a trigger configuration;
- Figures 9 and 10 are schematic representations of the multifunction valve applied to a tank.

### Description of a preferred embodiment of the invention

With reference to the figures in the attached tables, a multifunction valve (OTV valve) for a tank 101 containing high-pressure hydrogen is indicated as a whole with 1. Typically, in the case of application to automotive systems, hydrogen is loaded into the tank at a pressure of 350, 700 or even 1000 bar.

The OTV valve 1 comprises a valve body 2 applicable to the tank 101, for example by means of a threaded neck; preferably, the valve body is manufactured as a single part made of a metal material, for example aluminum, by means of machining by removing material from a semifinished product obtained by hot pressing.

The OTV valve comprises a supply inlet duct 3, implemented in part within the valve body 2, intended to be connected to a gas supply system, and a supply outlet duct 5, implemented in part within the valve body 2, which, downstream (taking into account the direction of the gas during the supply phase), flows into the tank and, upstream, is in communication with the supply inlet duct 3. The OTV valve also comprises an outlet duct 7, implemented in part within the valve body 2, for supplying gas to components downstream of the OTV valve, and an inlet duct 9, implemented in part within the valve body 2, which, upstream (taking into account the direction of the gas during the gas use phase), is in communication with the tank and, downstream, is in communication with the outlet duct 7. Preferably, the supply inlet duct 3 and the outlet duct 7 are partly overlapped.

Within the valve body 2, the OTV valve 1 further comprises a by-pass duct 11 which, upstream (taking into account the direction of the gas during an emergency evacuation phase), flows into the tank and an evacuation duct 13 in communication downstream with the external environment and upstream with the by-pass duct 11.

A thermal safety device 15 (TPRD device) is operative between the by-pass duct 11 and the evacuation duct 13.

According to a preferred embodiment, the TPRD device 15 comprises a shutter 17 extending along a shutter axis X and translatable along said shutter axis X between a closing position, in which it prevents the fluid connection between the by-pass duct 11 and the evacuation duct 13, and an opening position, in which it allows the fluid connection between the by-pass duct 11 and the evacuation duct 13.

The TPRD device 15 further comprises an elastic element 19 in compression, which permanently operates on the shutter 17, influencing it from the closing position towards the opening position.

Furthermore, the TPRD device 15 comprises a breakable, temperature-sensitive bulb 21; the bulb 21, when intact, is configured and arranged in such a way to prevent the translation of the shutter 17 from the closing position to the opening position; in other words, when intact, the bulb 21 opposes the action of the elastic element 19. For example, the bulb 21 extends in the direction of the shutter axis X, for example coaxially to said shutter 17.

To this end, preferably, the TPRD device 15 comprises a seat 23 and a threaded cap 25; the bulb 21 is abutting, on the one hand, against the shutter 17 and, on the other hand, against the seat 23, fixedly held in position by the cap 25.

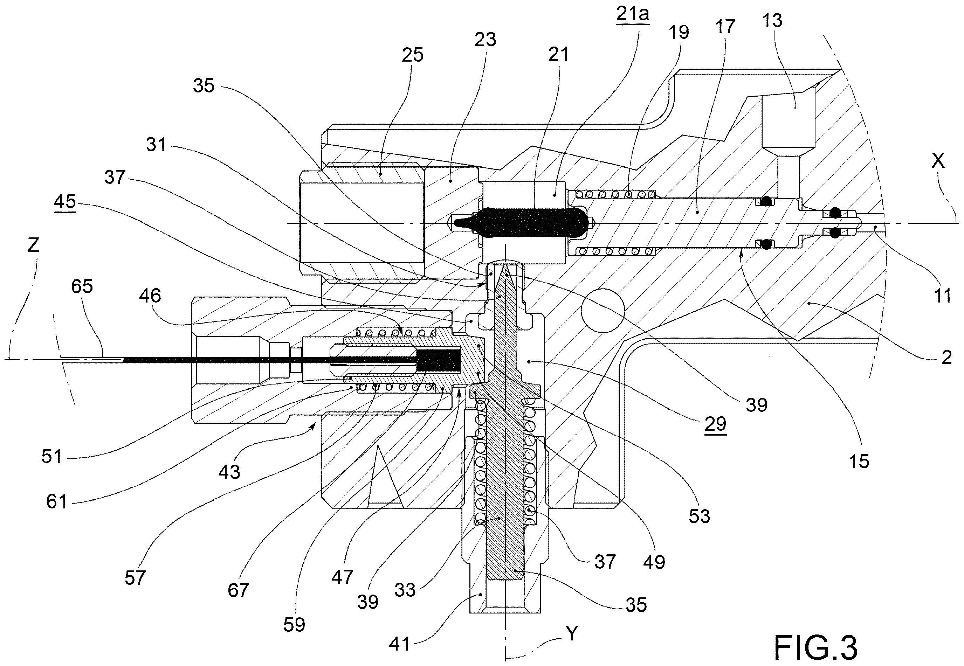

In a configuration of normal use (Figure 3), the shutter 17 is in the closing position in which it prevents communication between the by-pass duct 11 and the evacuation duct 13; the gas under pressure present within the by-pass duct 11 therefore may not flow towards the evacuation duct 13. In such a configuration, the elastic element 19 pushes the shutter 17 towards the opening position, but the bulb 21, accommodated within a bulb compartment 21a of the valve body 2, locked between the shutter 17 and the seat 23, opposes the action of the elastic element 19, so that the shutter remains in the closing position.

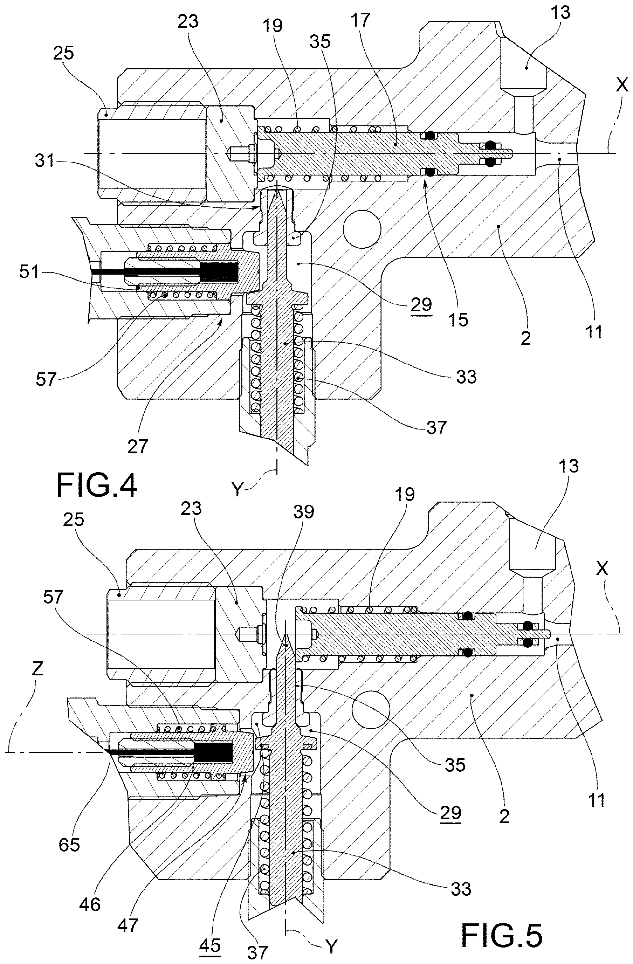

When the temperature in an area near the bulb 21 exceeds a predefined threshold value (trigger threshold), for example due to a fire, the bulb 21 explodes and shatters, so that the elastic element 19 pushes the shutter into the opening position, without impediment. The fluid connection between the by-pass duct 11 and the evacuation duct 13 is thus restored and the gas under pressure may suddenly flow from the tank to the external environment (local emergency configuration, Figure 4).

The OTV valve further comprises an auxiliary device 27 adapted to act mechanically on the bulb 21 to break it.

For example, the valve body 2 comprises an auxiliary compartment 29 in communication with the bulb compartment 21a, preferably via an auxiliary passage 31 of reduced diameter compared to that of the auxiliary compartment 29.

The auxiliary device 27 comprises a hammer 33 at least partially received in said auxiliary compartment 31 of the valve body, in a sliding manner; the hammer 33 extends mainly along an impact axis Y between a distal end 35 and a proximal end 37, close to the bulb compartment 21a.

The hammer 33 is movable, and in particular translatable, between an advanced position, in which it impacts against the bulb 21, and a backward position, in which it does not influence the bulb 21.

Preferably, the hammer 33, at the proximal end 37, comprises a pointed head 39, for example coaxial to the impact axis Y, placed in front of the bulb 21 when intact. In the advanced position, the head 39 impacts the bulb 21, thus breaking it.

Preferably, moreover, the auxiliary device 27 comprises a guide bush 35, placed in the auxiliary passage 31, inside which the hammer 33 is guided in a sliding manner.

Furthermore, the auxiliary device 27 comprises an elastic element 37 configured to permanently influence the hammer towards the advanced position. For example, the elastic element 37 is a spring, placed under compression between a shoulder 39 of the hammer 33, and an auxiliary cap 41 fixed to the valve body 2 so as to close the auxiliary compartment 29, preferably screwed thereto.

The auxiliary device 27 is associated with a trigger device 43 which, in the normal operating configuration (Figure 3), retains the hammer 33 in the backward position and, in a remote emergency configuration (Figure 5), is disengaged from the hammer 33 so that it may be brought, under the action of the elastic element 37, into the advanced position in which it breaks the bulb 21.

For example, the valve body 2 comprises a trigger compartment 45 in communication with the auxiliary compartment 29, preferably via a trigger passage 47 of reduced diameter compared to the diameter of the trigger compartment 45.

The trigger device 43 comprises a stop 46 at least partially accommodated within the trigger compartment 45, sliding between an advanced position in which it mechanically engages the hammer 33, holding it in the backward position, and a backward position, in which it is disengaged from the hammer 33. The stop 46 is translatable from the advanced position to the backward position along a trigger axis Z.

Preferably, the stop 46 extends predominantly along said trigger axis Z between a proximal end 49 close to the hammer 33 and an opposite distal end 51. At the proximal end 49, preferably, the stop 46 comprises an engagement head 53 which, in the advanced position of the stop, engages the hammer 33. In particular, the head 53 is in contact with the shoulder 39 of the hammer 33; preferably, said head 53 of the stop 45 is a truncated cone shape and coaxial to the trigger axis Z and influences a truncated cone surface 39a of the shoulder 39, coaxial to the impact axis Y.

The trigger device 43 further comprises an elastic element 57 configured to permanently influence the stop 46 towards the advanced position. For example, the elastic element 57 is compressed between a radial projection 59 of the stop 46 and a fixed abutment 61, for example formed by a trigger plug 63 fixed to the valve body 2 so as to close the trigger compartment 45, for example screwed to it.

The trigger device 43 further comprises a heat sensitive element 65 comprising at least one heat sensitive section consisting of a wire made of a shape-memory material (SMA wire) which, as the temperature increases, tends to shorten. Preferably, the entire heat sensitive element 65 consists of an SMA wire.

The heat sensitive element 65 has an extension that is predominantly along the direction of the trigger axis Z, preferably coaxial thereto, and is fastened to a first end or an end 67 proximal to the stop 46; the other end or distal end 69, arranged for example within an area of the tank that is remote in relation to the OTV valve, is free to slide by means of the shortening of the heat sensitive element 65, at least in an initial stand-by configuration.

For example, the trigger device 43 comprises an internally hollow proximal insert 71 that may be screwed to the valve body 2, is adapted to receive slidingly therewithin the stop 46, and is fastened at the proximal end of the heat sensitive element 65, and the elastic element 57.

Preferably, furthermore, the trigger device 43 comprises an internally hollow distal block 73, fastened in a remote area, for example to the tank, in a position that is axially opposite to that of the OTV valve. A terminal section 65' of the heat sensitive element 65, terminating in the free slidable distal end 69, is received within the distal block 73.

The distal block 73 comprises a trigger abutment 75, for example consisting of a shoulder of the distal block 73, projecting radially internally, adapted to obtain an abutment to block the distal end 69 of the heat sensitive element 65. In particular, the distal end 69 is arranged opposite the proximal end 67 in relation to the trigger abutment 75.

Preferably, the trigger device 43 comprises a calibration insert 81, consisting of a bush which may be screwed to the distal block 73, having said trigger abutment 75 in the form of an annular shoulder. In the stand-by configuration, the relative position between the proximal end 67 and the position of the trigger abutment 75 is adjustable according to the screwing of the calibration insert 81 into the distal block 73. This makes it possible to adequately position the trigger abutment 75 during the step of assembling and testing the trigger device.

Furthermore, preferably, the trigger device 43 comprises a protective casing 83, for example a rigid tube, that extends along the trigger axis Z, between the OTV valve and the distal block 73; a section of the heat sensitive element 65 is received in the protective casing 83.

The ambient conditions in which the trigger device 43 operates are defined by:
- a trigger temperature T2, at which the trigger device activates the TPRD device, thereby allowing for the sudden outflow of the gas; for example, the trigger temperature is equal to 105°C;
- a minimum predefined temperature T0, for example the ambient temperature, conventionally identified, lower than the trigger temperature T1; for example, the minimum temperature is equal to 20°C.

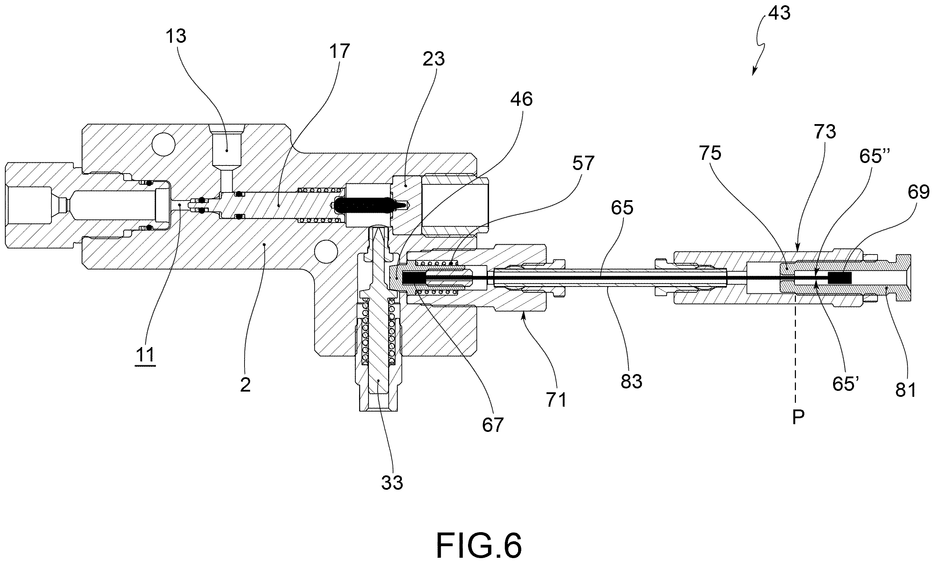

In a stand-by configuration of the trigger device (Figure 6), when the temperature detected by the heat sensitive section of the heat sensitive element 65 is equal to the minimum temperature T0 (T=T0), the distal end 69 of the heat sensitive element 65 is freely slidable, insofar as it is uncoupled from the trigger abutment 75; in particular, between the distal end 69 and the trigger abutment 75 there extends a free section 65'' of the heat sensitive element 65.

In the stand-by configuration of the trigger device, the TPRD device is in the normal operating configuration (Figure 3), wherein the stop 46 is in the advanced position and holds the hammer 33 in the backward position.

In an intermediate configuration of the trigger device, when the temperature detected by the heat sensitive section of the heat sensitive element 65 is greater than the minimum temperature T0 and lower than an activation temperature T1, which is in turn lower than the trigger temperature T2, (T0 < T < T1 < T2), the distal end 69 of the heat sensitive element 65 remains freely slidable, insofar as it is uncoupled from the trigger abutment 75, but the free section 65'' is shortened by virtue of the property of the shape-memory material.

In the transition between the stand-by configuration and the intermediate configuration, that is to say when the temperature detected has increased in relation to the minimum temperature, but remains lower than the activation temperature T1, the heat sensitive element 65 is shortened by virtue of the property of the shape-memory material, but the TPRD device has not been activated insofar as the distal end 69 has moved freely into the distal block 73, thereby approaching the trigger abutment 75.

Therefore, in an intermediate configuration of the trigger device, the TPRD device remains in the normal operating configuration (Figure 3).

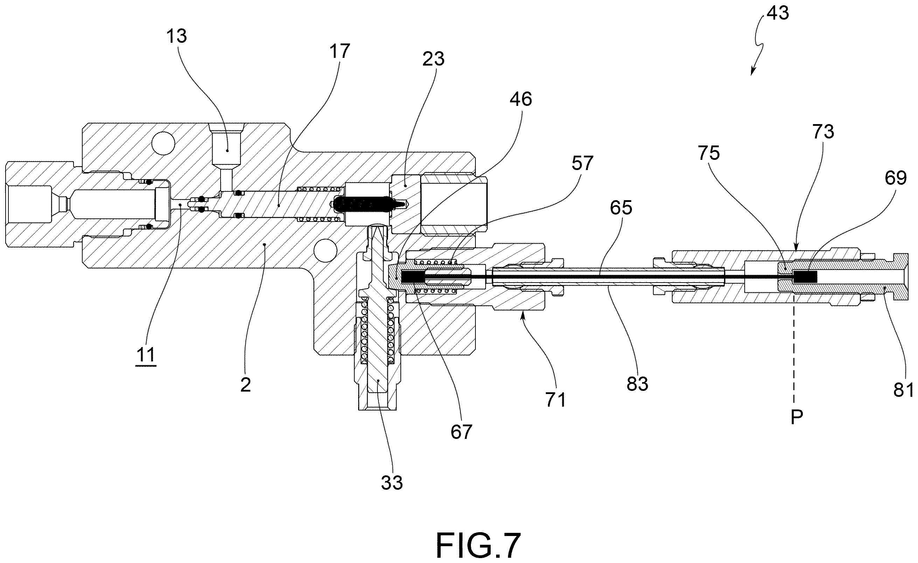

In an activation configuration of the trigger device (Figure 7), when the temperature determined by the heat sensitive section of the heat sensitive element 65 is equal to the activation temperature T1 and lower than the trigger temperature T2 (T0 < T1 = T < T2), the distal end 69 is in an activation limit position wherein it abuts the trigger abutment 75, but, because the stop 46 has not yet been pulled, the TPRD device remains in the normal operating configuration. For example, the activation temperature T1 is between 90°C and 95°C.

As the temperature T increases further but remains lower than the trigger temperature T2 (T0 < T1 < T < T2), the shortening of the heat sensitive section results in an action that pulls the proximal end 67 and that moves the stop 46, insofar as the distal end 69 is abutting against the trigger abutment 75.

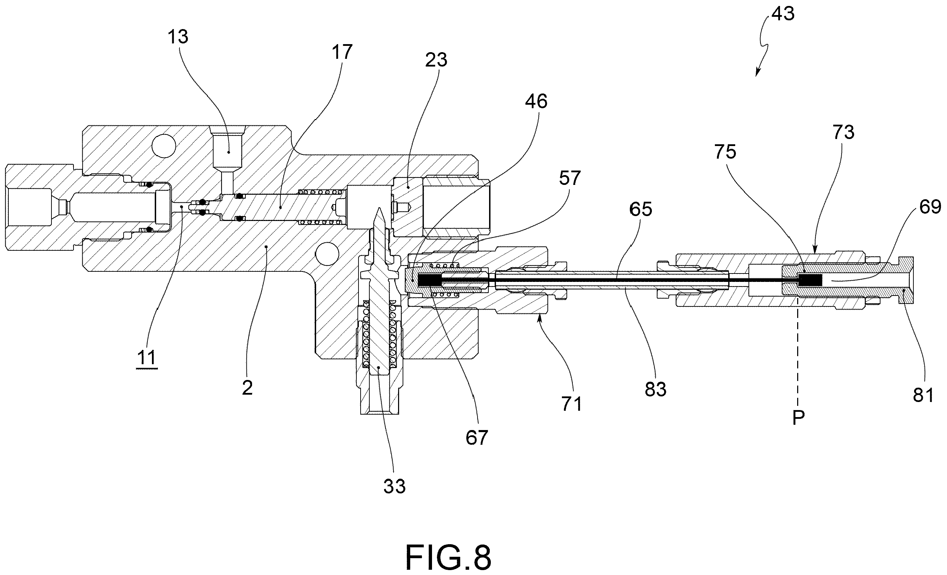

Finally, in a trigger configuration of the trigger device (Figure 8), when the temperature determined by the heat sensitive section of the heat sensitive element 65 is above or equal to the trigger temperature T2 (T0 < T1 = T < T2), the distal end 69 remains abutting the trigger abutment 75, and the shortening of the heat sensitive section has resulted in the movement of the stop 46 and the uncoupling of the hammer 33.

In other words, in the trigger configuration of the trigger device, the TPRD device is in a remote emergency configuration (Figure 5), wherein the heat sensitive element 65 influences the stop 46 due to the shortening, pulling it towards the backward position, overcoming the resistance action of the elastic element 57. Consequently, the stop 46 disengages the hammer 33 which, under the action of the elastic element 37, moves to the advanced position in which it breaks the bulb 21. Consequently, the shutter 17, under the action of the elastic element 19, is moved to the open position, allowing the gas to suddenly escape from the evacuation duct 13.

The multifunction valve 1 is typically applied to a neck 99 of the tank 101; the neck is cylindrical and has a tank axis K.

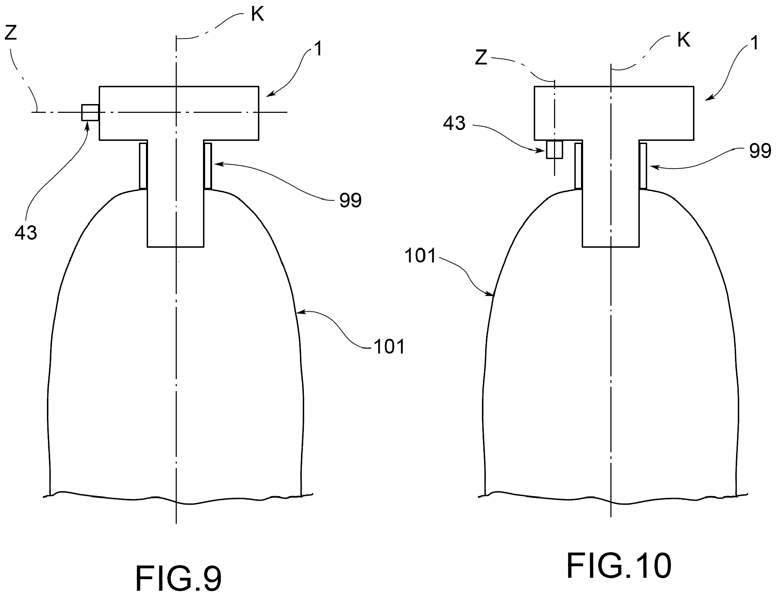

According to one embodiment of the invention, the multifunction valve 1 and/or the trigger device 43 are configured in such a way that the trigger axis Z is orthogonal to the tank axis K (Figure 9).

According to a further embodiment of the invention, the multifunction valve 1 and/or the trigger device 43 are configured in such a way that the trigger axis Z is parallel to the tank axis K (Figure 10).

Preferably, moreover, the heat sensitive element 65 is fixed, in a remote area of the multifunction valve 1, to the tank 101, for example in an area axially opposite to that of the neck 99 to which the multifunction valve is applied or to an area of the side mantle of the tank. Advantageously, this makes it possible to monitor the temperature for the entire tank.

Innovatively, the trigger device according to the present invention satisfies the requirements of the sector, insofar as the manufacturing is simple and the operation is extremely reliable. The distal end, in fact is left free to slide up to the trigger abutment, without the need to design and install elastic compensating elements.

Advantageously, furthermore, the trigger device according to the present invention is very reliable because, since the SMA wire is not under tension, said wire is not subject to vibrations and consequent fatigue stresses as instead occurs with tensioned SMA wire solutions.

Furthermore, the elastic element that holds the stop in the advanced position does not also bear a preload due to tension of the SMA wire. Advantageously, this makes it possible to envisage components that are subjected to less stress and therefore a more reliable device.

It is understood that a person skilled in the art, in order to meet contingent needs, could make modifications to the trigger device described above, all of which are contained within the scope of protection as defined by the following claims.

## Claims

1. A trigger device (43) for a thermal safety device (15) of a fuel cell automotive system, comprising:
- a stop (46) which may be moved between an advanced position, in which the thermal safety device (15) is in a ordinary operating configuration in which it is inactive, and a retracted position, in which the thermal safety device (15) is in a remote emergency configuration for the sudden escape of gas;
- a heat sensitive element (65) comprising at least one heat sensitive section consisting of a wire made of a shape-memory material which, as the temperature increases, tends to shorten, wherein said heat sensitive element (65) extends between a proximal end (67) fixed to the stop (46) and a distal end (69);
- a trigger abutment (75) arranged in an abutting position (P) between the proximal end (67) and the distal end (69) and adapted to obtain an abutment to block the movement of the distal end (69);
wherein, in an intermediate configuration of the trigger device, in which a temperature (T) perceived by the heat sensitive section of the heat sensitive element (65) is below an activation temperature (T1), the distal end (69) of the heat sensitive element (65) is freely slidable by means of the shortening of the heat sensitive element (65), so that the proximal end (67) does not move the stop (46) and the thermal safety device remains in the ordinary operating configuration; and
wherein, in an activation configuration of the trigger device, in which the temperature (T) perceived by the heat sensitive section of the heat sensitive element (65) is above or equal to the activation temperature (T1), the distal end (69) abuts against the trigger abutment (75), so that the proximal end (67) is adapted to move the stop (46) to bring the thermal safety device (15) to the remote emergency configuration.

2. A trigger device according to claim 1, wherein in a trigger configuration of the trigger device, in which the temperature (T) perceived by the heat sensitive section of the heat sensitive element (65) is above the activation temperature (T1) and below or equal to a trigger temperature (T2), the distal end (69) abuts against the trigger abutment (75), the stop (46) is in the retracted position and the thermal safety device (15) is in the remote emergency configuration.

3. A trigger device according to claim 1 or 2, wherein the whole heat sensitive element (65) consists of a wire made of a shape-memory material.

4. A trigger device according to any one of the preceding claims, comprising a distal block (73), internally hollow, which may be fixed in a remote area, inside which the distal end (69) is slidably received.

5. A trigger device according to claim 4, wherein the trigger abutment (75) is a shoulder internally radially projecting in the distal block (73).

6. A trigger device according to any one of the preceding claims, wherein the abutment position (P) is registrable.

7. A trigger device according to claim 6, comprising a calibration insert (81) consisting of a bush which may be screwed to the distal block (73), inside which the distal end (69) is slidably received, said trigger abutment (75) being an annular shoulder of said bush.

8. A trigger device according to any one of the preceding claims, comprising a proximal insert (71), internally hollow, which may be screwed to a valve body (2), wherein the stop (46) and an elastic element (57) configured to permanently influence the stop (46) towards the advanced position are received.

9. A trigger device according to any one of the preceding claims, comprising a protective casing (83), for example a rigid tube, wherein a section of the heat sensitive element (65) is received.

10. A group comprising:
- a thermal safety device (15);
- a trigger device (43) according to any one of the preceding claims, operatively engaged to the thermal safety device (15).

11. An assembly comprising:
- a multifunction valve (1);
- a thermal safety device operatively engaged to the multifunction valve (1);
- a trigger device (43) according to any one of claims 1 to 9, operatively engaged to the thermal safety device (15) .

12. An assembly comprising:
- a tank (101) for high pressure hydrogen;
- a multifunction valve (1) operatively engaged to the tank (101);
- a thermal safety device operatively engaged to the multifunction valve (1);
- a trigger device (43) according to any one of claims 1 to 9, operatively engaged to the thermal safety device (15) .
